# FASCICULE DE BREVET EUROPEEN

(11) **EP 3 060 455 B1**
(45) Date de publication et mention de la délivrance du brevet: **14.02.2018**
(21) Numéro de dépôt: 14787222.0
(22) Date de dépôt: 26.09.2014
(51) Int. Cl.: B62D 35/00

(54) **STRUCTURE AVANT DE VEHICULE AUTOMOBILE EQUIPEE D'UN SPOILER MOBILE DISPOSE SOUS LE BOUCLIER**
KRAFTFAHRZEUGVORDERSTRUKTUR MIT EINEM UNTER DEM STOSSFÄNGER ANGEORDNETEN BEWEGLICHEN SPOILER
MOTOR VEHICLE FRONT STRUCTURE PROVIDED WITH A MOVABLE SPOILER ARRANGED UNDER THE BUMPER

(30) Priorité: 23.10.2013 FR 1360314
(43) Date de publication de la demande: 31.08.2016
(73) Titulaire: Renault s.a.s, 92100 Boulogne-Billancourt (FR)
(72) Inventeur: HOLLEVILLE, Francis, F-78470 St Remy les Chevreuse (FR); DEYSSON, Guillaume, F-78180 Montigny (FR); CZEPCZAK, Raphael, F-78720 Cernay la Ville (FR)
(86) Numéro de dépôt international: PCT/FR2014/052434
(87) Numéro de publication internationale: WO 2015/059377

(56) Documents cités:
- EP-A1- 1 405 783
- DE-A1-102011 018 445
- US-A- 4 398 764

## Description

L'invention concerne une structure avant de véhicule automobile équipée d'un spoiler mobile disposé sous le bouclier.

Une structure avant comprend généralement un bouclier, lequel est parfois équipé d'une bavette, encore appelée « spoiler » ou « déflecteur » par l'homme de l'art, disposée sous le bouclier et destinée à améliorer l'aérodynamique du véhicule.

Il existe ainsi des spoilers articulés entre une position haute, occupée à basse vitesse pour faciliter une circulation en ville malgré les obstacles que l'on peut y trouver (dos d'âne, trottoirs,...) et une position basse, occupée à vitesse élevée afin de diminuer la valeur du coefficient de trainée du véhicule et réduire ainsi sa consommation et afin d'améliorer la tenue de route du véhicule. Cette articulation peut être obtenue par rotation d'une partie arrière du spoiler autour d'un axe transversal au véhicule, tel que décrit par exemple dans le document EP 1 405 783 A1. Dans ce document, le spoiler décrit comprend toutefois une paroi verticale qui est disposée contre l'arrière du bouclier en position haute du spoiler. Du fait de la hauteur non négligeable de cette paroi verticale, celle-ci peut obturer partiellement les entrées d'air présentes dans le bouclier, ce qui n'est pas souhaitable. En outre, l'agencement de ce spoiler est tel qu'il passe de l'une des positions haute et basse à l'autre de ces positions en fonction de la vitesse du véhicule, des ressorts de rappel permettant de garantir un retour de la position basse vers la position haute. Du fait de cet agencement et d'une commande aérodynamique de l'abaissement du spoiler, il existe un risque que ce dernier oscille entre les positions haute et basse, ce qui n'est pas souhaitable. Enfin, en cas de choc petit choc frontal, un tel spoiler est susceptible de se retourner entièrement et de se retrouver sous les roues du véhicule, immobilisant celui-ci.

Il existe donc un besoin pour un spoiler dont le déploiement soit sûr et fiable, qui soit peu encombrant verticalement et qui ne risque pas d'immobiliser le véhicule en cas de petit choc frontal.

A cet effet, l'objet de l'invention concerne une structure avant de véhicule automobile comprenant un bouclier et un élément mobile, notamment une plaque mobile, dont un bord arrière est articulé à ladite structure avant autour d'un axe transversal situé en arrière du bouclier, caractérisée en ce qu'un bord avant dudit élément mobile est relié à une face inférieure du bouclier par un soufflet souple, ledit élément mobile étant mobile entre :
- une position haute dans laquelle son bord avant est en appui contre ladite face inférieure du bouclier, le soufflet souple étant replié sur lui-même entre ladite face inférieure et l'élément mobile et,
- une position basse dans laquelle son bord avant est écarté de ladite face inférieure du bouclier, le soufflet souple étant déployé,
et en ce qu'elle comprend des moyens de pilotage du déplacement dudit élément mobile au moins de la position haute à la position basse.

L'élément mobile a typiquement la forme générale d'une plaque mobile.

Par un tel agencement, le bord avant de l'élément mobile, faisant fonction de bavette ou spoiler, est en permanence relié à une face inférieure du bouclier par le soufflet souple : l'élément mobile présente ainsi un encombrement très faible en position haute et ne peut obturer des ouvertures d'aération situées au niveau du bouclier ou au dessus du bouclier. De plus, en cas de petit choc frontal, ce soufflet souple retient le bord avant de l'élément mobile, limitant ainsi les risques de retournement et une immobilisation du véhicule. Enfin, les moyens de pilotage de la présente invention commandent le déploiement de l'élément mobile au moins de sa position haute à sa position basse : ce n'est donc pas la vitesse du véhicule qui entraine le déplacement de l'élément mobile, ce qui permet de réduire les risques d'oscillations de l'élément mobile et d'améliorer la fiabilité de son déploiement.

Bien que la vitesse du véhicule n'entraine pas directement le déplacement de l'élément mobile, les moyens de pilotage de la présente invention peuvent comprendre des moyens pouvant être commandés par un ordinateur de bord du véhicule en fonction de la vitesse du véhicule.

Les moyens de pilotage peuvent comprendre un moteur électrique entrainant en rotation l'axe d'articulation de l'élément mobile. En variante, ils peuvent également comprendre au moins un vérin disposé entre l'élément mobile et la structure avant pour piloter le déploiement de la plaque mobile. Ces modes de réalisation ne sont toutefois pas préférés.

Avantageusement et de manière non limitative, les moyens de pilotage peuvent comprendre :
- un arbre à cames monté sur la structure avant sensiblement parallèlement à l'axe d'articulation dudit élément mobile et agencé de sorte que les cames soient en contact avec l'élément mobile afin de déplacer ledit élément mobile de la position haute à la position basse,
- des moyens de rappel dudit élément mobile de la position basse à la position haute, notamment des moyens de rappel élastiques.

Un tel agencement présente l'avantage d'être compact et d'obtenir de manière simple et fiable un déplacement de l'élément mobile.

Les moyens de pilotage peuvent notamment comprendre un moteur électrique fixé sur la structure avant et agencé pour entrainer ledit arbre à cames en rotation sur lui-même.

Ce moteur électrique peut entrainer l'arbre à cames directement ou indirectement au moyen d'un moyen de transmission.

Avantageusement et de manière non limitative, un moyen de transmission peut relier le moteur électrique à l'arbre à cames, ledit moyen de transmission étant au moins un câble ou au moins une biellette s'étendant transversalement audit arbre, entre ce dernier et le moteur électrique. Ceci peut notamment permettre de positionner le moteur électrique à distance de l'arbre à cames, dans une zone peu encombrée de la structure avant. De préférence, ce moyen de transmission comprend au moins une biellette, ce qui peut permettre de réduire davantage les risques d'oscillation de l'élément mobile.

Avantageusement et de manière non limitative, ledit arbre à cames peut être situé à proximité du bord avant de l'élément² mobile. Autrement dit, l'arbre à cames peut être plus proche du bord avant de l'élément mobile que de son bord arrière. Un tel positionnement peut permettre de faciliter le déplacement de l'élément mobile de la position haute à la position basse en augmentant l'effet levier exercé par les cames sur l'élément mobile. Par exemple, l'arbre à cames peut être situé au niveau de la moitié ou du tiers de l'élément mobile adjacent au bord avant.

En variante ou en combinaison, les moyens de rappel peuvent être situés à proximité du bord avant de l'élément mobile. Autrement dit, les moyens de rappel peuvent être plus proches du bord avant de l'élément mobile que de son bord arrière. Un tel positionnement peut permettre de faciliter le déplacement de l'élément mobile de la position basse à la position haute et de limiter les risques de retournement de l'élément mobile. Par exemple, ces moyens de rappel peuvent être situés au niveau de la moitié ou d'un tiers de l'élément mobile adjacent au bord avant.

Avantageusement et de manière non limitative, l'arbre à cames peut s'étendre sur sensiblement toute la longueur de l'élément mobile suivant la direction transversale de la structure avant, lesdites cames étant de préférence réparties régulièrement sur la longueur de l'arbre. Ceci peut permettre d'améliorer le déplacement de l'élément mobile de sa position haute à sa position basse.

En fonction de la forme du bouclier, il peut être avantageux de réaliser des cames de dimensions différentes, par exemple de rayon maximal différent. Ceci permet d'améliorer l'aspect esthétique de l'élément mobile en position basse, les cames déformant l'élément mobile par exemple pour qu'elle prenne une position sensiblement parallèle à la face inférieure du bouclier et à la route.

Tel que déjà précisé, le soufflet souple de la présente invention peut être replié sur lui-même en position haute de l'élément mobile, lequel est alors en contact contre une face inférieure du bouclier. Le matériau du soufflet souple peut donc être choisi pour présenter une souplesse suffisante pour lui permettre d'être replié/déployé tout au long de la vie du véhicule. Avantageusement, ce soufflet souple peut également être suffisamment résistant pour ne pas être percé par des gravillons projetés lors du roulage du véhicule.

Avantageusement et de manière non limitative, le soufflet souple est en matériau polymère, par exemple choisi parmi les élastomères thermoplastiques (TPE) tels que les copolymères blocs (styrène-éthylène-butylène-styrène) (SEBS), les copolymères blocs (styrène-butadiène-styrène-méthylacrylate) (SBSM), les terpolymères (éthylène-propylène-diène) (EPDM) ou tout autre polymère adapté.

La souplesse et/ou résistance recherchée pourra être obtenue en modulant l'épaisseur et/ou la dureté du matériau polymère. Il est également envisageable d'utiliser des textiles imprégnés ou recouverts de matériau polymère.

Par exemple, pour un TPE, l'épaisseur peut être de 0,8 à 1,5 mm, et la dureté Shore A peut être de 60 à 80 Shore A.

Avec un tel soufflet souple en matériau polymère, il est possible de solidariser ce soufflet souple au bord avant de l'élément mobile par surmoulage. En particulier, l'élément mobile peut également être en matériau polymère, mais d'une rigidité plus importante, suffisante pour assurer la tenue de l'élément mobile en position basse lors du roulage du véhicule.

Avantageusement et de manière non limitative, le soufflet souple peut s'étendre sur toute la longueur du bord avant de l'élément mobile. Le soufflet souple s'étend ainsi de manière continue le long du bord avant entre l'élément mobile et la face inférieure du bouclier. Ceci peut permettre d'améliorer l'aspect de l'élément mobile en position basse.

Pour un meilleur aspect, l'élément mobile peut en outre comporter un enjoliveur qui s'étend sur toute la longueur du bouclier, notamment sur toute la longueur de la face inférieure du bouclier (suivant la direction transversale de la structure avant).

Le soufflet souple peut également comprendre un bord supérieur présentant une rigidité suffisante pour pouvoir être fixé à la face inférieure du bouclier par des moyens mécaniques, par exemple par vissage, rivetage ou analogue, permettant ainsi un démontage aisé du soufflet si nécessaire.

Le soufflet peut également intégrer une lame inférieure souple qui peut venir en contact avec le sol dans les pentes ou à proximité de trottoirs, cette lame souple permettant de réduire au moins visuellement la garde au sol lorsque le spoiler est rétracté (position haute).

L'invention concerne également un véhicule automobile comprenant une structure avant selon l'une des revendications précédentes.

L'invention est maintenant décrite en référence aux dessins annexés, non limitatifs, dans lesquels :
- la figure 1 est vue schématique en coupe d'une structure avant selon un mode de réalisation de l'invention, comprenant une plaque mobile en position haute ;
- la figure 2 est une vue schématique similaire à la figure 1 dans laquelle la plaque mobile est en position basse ;
- la figure 3 est une représentation schématique en perspective de la plaque mobile de la figure 1 et de ses moyens de pilotage, la position basse de la figure 2 étant représentée en traits tiretés.

Dans la présente description, les termes avant, arrière, supérieur, inférieur, font référence aux directions avant et arrière, supérieure, inférieure de la structure avant, lesquelles correspondent aux directions avant et arrière, supérieure, inférieure du véhicule lorsque la structure avant est montée sur le véhicule. Les axes X, Y, Z, correspondent respectivement à l'axe longitudinal (d'avant en arrière), transversal et vertical de la structure avant.

Par sensiblement horizontal, longitudinal ou vertical, on entend une direction/un plan formant un angle d'au plus ±20°, voire d'au plus ±10° avec une direction/un plan horizontal, longitudinal ou vertical.

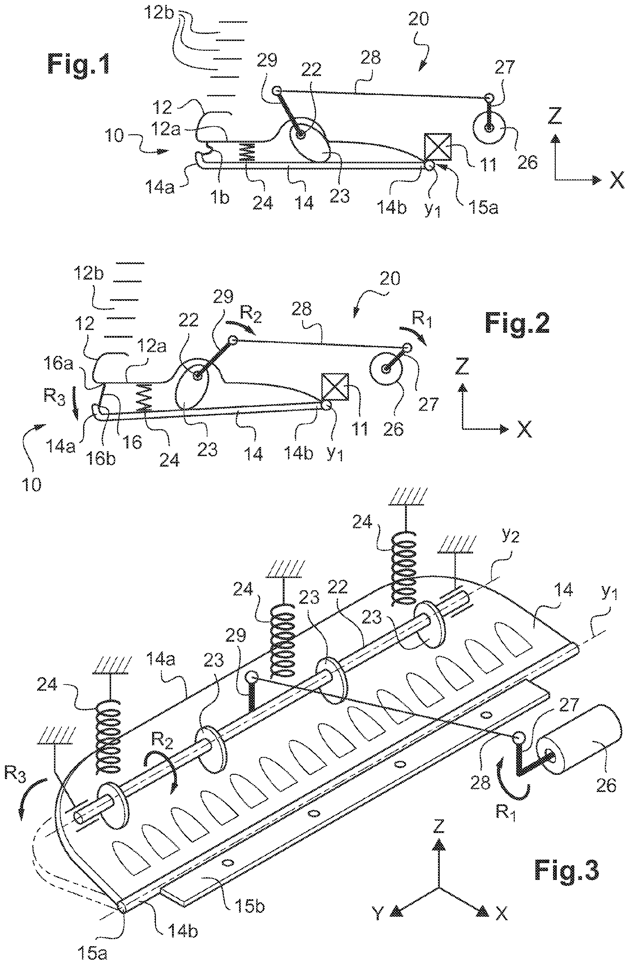

Les figures 1 et 2 représentent une structure avant 10 de véhicule automobile comprenant un bouclier 12 et une plaque mobile 14.

De manière classique, le bouclier 12 comprend une face inférieure 12a sensiblement horizontale, qui forme par exemple un convergent du bouclier. Le bouclier 12 comprend également des orifices d'aération 12b en partie supérieure.

La plaque mobile 14 présente des bords avant 14a et arrière 14b s'étendant sensiblement suivant la direction transversale Y de la structure avant 10. Cette plaque mobile 14 peut être en matériau polymère et sa forme peut être similaire à la forme du bouclier 12. Plus précisément, la forme du bord avant 14a peut suivre la forme du bouclier 12.

Le bord arrière 14b de la plaque mobile 14 est articulé à la structure avant 10 autour d'un axe transversal Y1 situé en arrière du bouclier 12. Cette articulation peut être formée par une charnière classique ou par une charnière film. Dans l'exemple, il s'agit d'une charnière classique comprenant un axe 15a monté à rotation sur le bord arrière 14b de la plaque mobile et sur une bande 15b solidarisée à un élément de structure 11, par exemple une traverse (figures 1 et 3).

Selon l'invention, le bord avant 14a de la plaque mobile 14 est relié à la face inférieure 12a du bouclier 12 par un soufflet souple 16.

La plaque mobile 14 est ainsi mobile entre :
- une position haute (figure 1) dans laquelle son bord avant 14a est en appui contre la face inférieure 12a du bouclier, le soufflet souple 16 étant replié sur lui-même entre la face inférieure 12a et la plaque mobile 14 et,
- une position basse (figure 2) dans laquelle son bord avant 14a est écarté de la face inférieure 12a du bouclier, le soufflet souple 16 étant déployé.

La plaque mobile 14 reste ainsi en permanence reliée au bouclier 12, en dessous de ce dernier suivant la direction verticale Z de la structure avant 10, de sorte que les orifices d'aération 12b du bouclier 12 restent libres et que l'encombrement de la plaque mobile 14 et du soufflet souple 16 est minimal verticalement en position haute.

Un bord transversal supérieur 16a du soufflet souple 16 est ainsi fixé à la face inférieure 12a du bouclier et un bord transversal inférieur 16b est fixé au bord avant 14a de la plaque mobile 14 (figure 2). Le bord transversal supérieur 16a du soufflet souple 16 peut comprendre une partie rigide (par exemple une plaque rigide sur laquelle le soufflet est surmoulé) ou une partie plus épaisse en vue de sa fixation à la face inférieure 12a du bouclier. Le bord transversal inférieur 16b peut être solidarisé au bord avant 14a par surmoulage.

Ce soufflet souple 16 s'étend sur toute la longueur du bord avant 14a de la plaque mobile 14 suivant la direction transversale Y de la structure avant. Il s'étend donc également sur toute la longueur du bouclier 12 suivant cette même direction transversale Y. Le soufflet souple 16 est en matériau polymère, par exemple en TPE.

La structure avant 10 est en outre équipée de moyens de pilotage 20 du déplacement de la plaque mobile 14 au moins entre la position haute et la position basse.

Dans l'exemple représenté, les moyens de pilotage 20 comprennent :
- un arbre à cames 22 monté sur la structure avant 10,
- des moyens de rappel 24 de ladite plaque mobile de la position basse à la position haute, des ressorts dans l'exemple.

L'arbre à cames 22, d'axe Y2, s'étend sensiblement parallèlement à l'axe d'articulation Y1 de la plaque mobile 14. Cet arbre à cames 22 est agencé de sorte que les cames 23 soient en contact avec la plaque mobile 14 afin de la déplacer de la position haute à la position basse suite à une rotation R2 de l'arbre à cames 22 autour de son axe Y2 (figures 2 et 3).

L'arbre à cames 22 est ainsi monté à rotation sur la structure avant 10 du véhicule, par exemple sur un élément fixe de la structure avant 10, tel que le bouclier 12, notamment la face inférieure 12a du bouclier 12.

L'arbre à cames 22 s'étend alors à proximité du bord avant 14a de la plaque mobile 14, les cames 23 venant en contact avec une surface de la plaque mobile 14 située dans une moitié ou un tiers adjacent au bord avant 14a de la plaque mobile 14.

L'arbre à cames 22 s'étend de préférence sur toute la longueur de la plaque mobile 14 (suivant la direction transversale Y) et les cames 23 sont régulièrement réparties sur la longueur de l'arbre à cames 22 pour un meilleur contrôle du déplacement de la plaque mobile 14.

Le bouclier 12 peut présenter une forme galbée ou courbe dans un plan vertical YZ. La plaque mobile 14 peut alors également former une forme similaire dans un plan vertical YZ. Dans ce cas, en position basse, la plaque mobile 14 n'apparaît plus parallèle à la face inférieure 12a du bouclier 12, ce qui n'est pas souhaitable esthétiquement. Afin d'améliorer l'aspect esthétique en position basse, il est alors possible de réaliser des cames 23 de dimensions différentes le long de l'arbre à cames 22, notamment des cames 23 présentant un rayon maximal différent, ceci afin de rendre le bord avant 14a de la plaque mobile 14 parallèle à la face inférieure 12a du bouclier 12 en position basse, même en cas de courbure de cette face inférieure. Par exemple, les cames 23 situées à proximité des extrémités de l'arbre à cames 22 peuvent présenter un rayon maximal supérieur aux autres cames 23, déformant ainsi légèrement la plaque mobile 14 en position basse. Le rayon minimal de l'ensemble des cames 23 peut en revanche être identique pour que la plaque mobile 14 soit plaquée sous la face inférieure 12a du bouclier 12 en position haute.

Les moyens de rappel 24 (ressorts de rappel) sont montés entre un élément fixe de la structure avant 10, tel que le bouclier 12, notamment sa face inférieure 12a, et la plaque mobile 14 à proximité du bord avant 14a de celle-ci. Ces ressorts de rappel 24 s'étendent sensiblement verticalement dans l'exemple, mais pourraient être inclinés vers l'avant ou vers l'arrière.

Dans l'exemple représenté, les ressorts de rappel 24 sont situés entre l'arbre à cames 22 et le bord avant 14a de la plaque mobile 14. Ils pourraient cependant être situés en arrière de l'arbre à cames 22. Dans ce cas, il est toutefois préférable qu'ils soient situés également au niveau d'une moitié ou d'un tiers de la plaque mobile 14 adjacent au bord avant 14a afin de faciliter un retour de la plaque mobile 14 de sa position basse à sa position haute.

Le nombre de cames 23 ou de ressorts de rappel 24 n'est pas limité et est indépendant, leur nombre peut notamment être choisi pour obtenir un déplacement optimal de la plaque mobile 14 entre ses positions haute et basse. On peut ainsi prévoir deux ou plus cames et/ou ressorts, de préférence au moins 3 ou 4, comme dans l'exemple représenté. En particulier, le nombre de ressorts 24 pourra dépendre de la raideur des ressorts utilisés, cette raideur étant calculée pour exercer une traction suffisante sur la plaque mobile 14 pour la ramener de la position basse à la position haute.

Les moyens de pilotage 20 comprennent également un moteur électrique 26 fixé sur la structure avant 10, de préférence sur un élément de structure fixe, et agencé pour entrainer en rotation sur lui-même l'arbre à cames 22.

Dans l'exemple représenté, un moyen de transmission relie le moteur électrique 26 à l'arbre à cames 22. Ce moyen de transmission comprend plusieurs biellettes 27, 28, 29 s'étendant transversalement à l'arbre à cames 22, entre ce dernier et le moteur électrique 26.

Une première biellette 27 comprend une extrémité solidaire en rotation de l'arbre du moteur électrique 26 (non représenté) et une extrémité articulée à une biellette centrale 28, dont l'autre extrémité est articulée à une troisième biellette 29. L'autre extrémité de cette troisième biellette 29 est solidaire en rotation de l'arbre à cames 22.

Dans une variante non représentée de l'invention, la transmission peut être directe entre le moteur et l'arbre à cames.

Le déplacement de la plaque mobile 14 entre ses positions haute et basse est maintenant décrit.

En position haute, le bord avant 14a de la plaque mobile 14 est en appui contre la face inférieure 12a du bouclier. La plaque mobile 14 s'étend sensiblement horizontalement (figure 1). Dans cette position haute, les cames 23 sont en appui contre la plaque mobile 14 et le soufflet souple 16 est replié sur lui-même. L'épaisseur du soufflet souple 16 replié peut par exemple être de l'ordre de 1cm. Le rayon de contact chaque came 23, défini entre le centre de la came et son point de contact avec la plaque mobile, est un rayon inférieur au rayon maximal de la came.

Afin de commander le déploiement du spoiler (ensemble formé de la plaque mobile 14 et du soufflet souple 16), le moteur électrique 26 est mis en rotation suivant la rotation R1 de la figure 2, entrainant une rotation R2 de l'arbre à cames 22 via les biellettes 27, 28, 29. Du fait de cette rotation, les cames 23 pivotent également et exercent une poussée sur la plaque mobile du fait du déplacement de leur plus grand rayon, entrainant ainsi la rotation R3 du bord avant 14a de la plaque mobile 14 et le déploiement du soufflet souple 16 jusqu'à atteindre la position basse (figure 2). En position basse, ce soufflet souple 16 s'étend sensiblement verticalement, par exemple sur une hauteur de 8 à 12 cm, et les cames 23 sont en contact avec la plaque mobile 14 au niveau de leur plus grand rayon.

Pour commander la rétractation du spoiler, il suffit de faire tourner le moteur électrique 26 en sens inverse ou de poursuivre la rotation dans le même sens : le contact des cames 23 sur la plaque mobile 14 ne s'exerce alors plus au niveau du rayon maximal des cames 23 de sorte que la plaque mobile 14 est ramenée dans sa position haute sous l'effet des moyens de rappel 24.

En cas de petit choc ou d'incident alors que le spoiler est déployé, le soufflet souple 16 et les moyens de rappel 24 retiennent le bord avant 14a de la plaque mobile 14, empêchant le retournement de celle-ci sous les roues du véhicule et une immobilisation de ce dernier.

L'élément ou la plaque mobile peut également avoir la forme générale d'un peigne, c'est-à-dire d'un corps pourvu d'évidements ou de découpes lui conférant une fusibilité, c'est-à-dire une capacité à se rompre en cas de choc au-delà d'un effort déterminé, afin de ne pas transmettre des efforts excessifs à la structure adjacente, susceptible de l'endommager ou de blesser un piéton. Notamment, un tel élément mobile peut comporter une partie formant un bord avant reliée à deux bras dirigés vers l'arrière de la structure avant, les extrémités libres de ces deux bras formant un bord arrière articulé à la structure avant. Ces bras peuvent être disposés latéralement. L'élément mobile présente alors la forme d'un cadre à trois côtés, dont l'ouverture est dirigée vers l'arrière de la structure avant.

## Revendications

1. Structure avant (10) de véhicule automobile comprenant un bouclier (12) et un élément mobile (14), notamment une plaque mobile, dont un bord arrière (14b) est articulé à ladite structure avant autour d'un axe transversal (Y1) situé en arrière du bouclier, **caractérisée en ce qu'**un bord avant (14a) dudit élément mobile (14) est relié à une face inférieure (12a) du bouclier par un soufflet souple (16), ledit élément mobile (14) étant mobile entre :
- une position haute dans laquelle son bord avant (14a) est en appui contre ladite face inférieure (12a) du bouclier, le soufflet souple (16) étant replié sur lui-même entre ladite face inférieure (12a) et l'élément mobile (14) et,
- une position basse dans laquelle son bord avant (14a) est écarté de ladite face inférieure (12a) du bouclier, le soufflet souple (16) étant déployé,
et **en ce qu'**elle comprend des moyens de pilotage (20) du déplacement dudit élément mobile (14) au moins de la position haute à la position basse.

2. Structure avant (10) selon la revendication 1, **caractérisée en ce que** les moyens de pilotage (20) comprennent :
- un arbre (22) à cames (23) monté sur la structure avant sensiblement parallèlement à l'axe d'articulation (Y1) dudit élément mobile et agencé de sorte que les cames (23) soient en contact avec l'élément mobile (14) afin de déplacer ledit élément mobile de la position haute à la position basse,
- des moyens de rappel (24) dudit élément mobile de la position basse à la position haute, notamment des moyens de rappel élastiques.

3. Structure avant (10) selon la revendication 2, **caractérisée en ce que** les moyens de pilotage (20) comprennent un moteur électrique (26) fixé sur la structure avant et agencé pour entrainer ledit arbre (22) à cames en rotation sur lui-même.

4. Structure avant (10) selon la revendication 3, **caractérisé en ce qu'**un moyen de transmission relie le moteur électrique (26) à l'arbre (22) à cames, ledit moyen de transmission comprenant au moins un câble ou au moins une biellette (27, 28, 29) s'étendant transversalement audit arbre (22), entre ce dernier et le moteur électrique.

5. Structure avant (10) selon l'une des revendications 2 à 4, **caractérisée en ce que** ledit arbre (22) à cames et/ou lesdits moyens de rappel (24) sont situés à proximité du bord avant (14a) dudit élément mobile.

6. Structure avant (10) selon l'une des revendications 2 à 5, **caractérisée en ce que** l'arbre (22) à cames (23) s'étend sur sensiblement toute la longueur de l'élément mobile (14) suivant la direction transversale (Y) de la structure avant, lesdites cames (23) étant de préférence réparties régulièrement sur la longueur de l'arbre.

7. Structure avant (10) selon l'une des revendications 2 à 6, **caractérisée en ce que** l'arbre (22) à cames (23) comprend des cames (23) dimensions différentes, par exemple de rayon maximal différent.

8. Structure avant (10) selon l'une des revendications 1 à 7, **caractérisée en ce que** le soufflet souple (16) est en matériau polymère.

9. Structure avant (10) selon l'une des revendications 1 à 8, **caractérisée en ce que** le soufflet souple (16) s'étend sur toute la longueur du bord avant (14a) de l'élément mobile, cette dernière s'étendant par exemple sur toute la longueur du bouclier.

10. Véhicule automobile comprenant une structure avant (10) selon l'une des revendications précédentes.

## Patentansprüche

1. Frontstruktur (10) eines Kraftfahrzeugs, die einen Stoßfänger (12) und ein bewegliches Element (14), insbesondere eine bewegliche Platte, enthält, von der ein hinterer Rand (14b) an die Frontstruktur um eine Querachse (Y1) angelenkt ist, die sich an der Rückseite des Stoßfängers befindet, **dadurch gekennzeichnet, dass** ein vorderer Rand (14a) des beweglichen Elements (14) mit einer Unterseite (12a) des Stoßfängers durch einen biegsamen Faltenbalg (16) verbunden ist, wobei das bewegliche Element (14) beweglich ist zwischen:
- einer oberen Stellung, in der sein vorderer Rand (14a) gegen die Unterseite (12a) des Stoßfängers in Anlage ist, wobei der biegsame Faltenbalg (16) zwischen der Unterseite (12a) und dem beweglichen Element (14) auf sich selbst umgefaltet ist, und,
- einer unteren Stellung, in der sein vorderer Rand (14a) von der Unterseite (12a) des Stoßfängers entfernt ist, wobei der biegsame Faltenbalg (16) entfaltet ist,
und dass sie Steuereinrichtungen (20) der Verschiebung des beweglichen Elements (14) mindestens von der oberen Stellung in die untere Stellung enthält.

2. Frontstruktur (10) nach Anspruch 1, **dadurch gekennzeichnet, dass** die Steuereinrichtungen (20) enthalten:
- eine Welle (22) mit Nocken (23), die auf die Frontstruktur im Wesentlichen parallel zur Gelenkachse (Y1) des beweglichen Elements montiert und so eingerichtet ist, dass die Nocken (23) mit dem beweglichen Element (14) in Kontakt sind, um das bewegliche Element von der oberen Stellung in die untere Stellung zu verschieben,
- Rückstelleinrichtungen (24) des beweglichen Elements von der unteren Stellung in die obere Stellung, insbesondere elastische Rückstelleinrichtungen.

3. Frontstruktur (10) nach Anspruch 2, **dadurch gekennzeichnet, dass** die Steuereinrichtungen (20) einen Elektromotor (26) enthalten, der an der Frontstruktur befestigt und eingerichtet ist, um die Nockenwelle (22) um sich selbst in Drehung zu versetzen.

4. Frontstruktur (10) nach Anspruch 3, **dadurch gekennzeichnet, dass** eine Antriebseinrichtung den Elektromotor (26) mit der Nockenwelle (22) verbindet, wobei die Antriebseinrichtung mindestens ein Kabel oder mindestens eine Schubstange (27, 28, 29) enthält, die sich quer zur Welle (22) zwischen dieser letzteren und dem Elektromotor erstreckt.

5. Frontstruktur (10) nach einem der Ansprüche 2 bis 4, **dadurch gekennzeichnet, dass** die Nockenwelle (22) und/oder die Rückstelleinrichtungen (24) sich in der Nähe des vorderen Rands (14a) des beweglichen Elements befinden.

6. Frontstruktur (10) nach einem der Ansprüche 2 bis 5, **dadurch gekennzeichnet, dass** die Welle (22) mit Nocken (23) sich über im Wesentlichen die ganze Länge des beweglichen Elements (14) gemäß der Querrichtung (Y) der Frontstruktur erstreckt, wobei die Nocken (23) vorzugsweise gleichmäßig über die Länge der Welle verteilt sind.

7. Frontstruktur (10) nach einem der Ansprüche 2 bis 6, **dadurch gekennzeichnet, dass** die Welle (22) mit Nocken (23) Nocken (23) mit unterschiedlichen Abmessungen enthält, zum Beispiel mit unterschiedlichem maximalem Radius.

8. Frontstruktur (10) nach einem der Ansprüche 1 bis 7, **dadurch gekennzeichnet, dass** der biegsame Faltenbalg (16) aus Polymermaterial ist.

9. Frontstruktur (10) nach einem der Ansprüche 1 bis 8, **dadurch gekennzeichnet, dass** der biegsame Faltenbalg (16) sich über die ganze Länge des vorderen Rands (14a) des beweglichen Elements erstreckt, wobei diese letztere sich zum Beispiel über die ganze Länge des Stoßfängers erstreckt.

10. Kraftfahrzeug, das eine Frontstruktur (10) nach einem der vorhergehenden Ansprüche enthält.

## Claims

1. Motor vehicle front structure (10) comprising a bumper (12) and a mobile element (14), notably a mobile panel, a rear edge (14b) of which is articulated to the said front structure about a transverse axis (Y1) situated to the rear of the bumper, **characterized in that** a front edge (14a) of the said mobile element (14) is connected to a lower face (12a) of the bumper by a flexible bellows (16), the said mobile element (14) being able to move between:
- a high position in which its front edge (14a) bears against the said lower face (12a) of the bumper, the flexible bellows (16) being folded on itself between the said lower face (12a) and the mobile element (14), and
- a low position in which its front edge (14a) is spaced away from the said lower face (12a) of the bumper, the flexible bellows (16) being deployed,
and **in that** it comprises control means (20) instigating the moving of the said mobile element (14) at least from the high position to the low position.

2. Front structure (10) according to Claim 1, **characterized in that** the control means (20) comprise:
- a cam shaft (22) with cams (23) which is mounted on the front structure substantially parallel to the axis of articulation (Y1) of the said mobile element and arranged in such a way that the cams (23) are in contact with the mobile element (14) so as to move the said mobile element from the high position to the low position,
- return means (24) for returning the said mobile element from the low position to the high position, notably elastic return means.

3. Front structure (10) according to Claim 2, **characterized in that** the control means (20) comprise an electric motor (26) fixed to the front structure and designed to drive the said cam shaft (22) in rotation on itself.

4. Front structure (10) according to Claim 3, **characterized in that** a transmission means connects the electric motor (26) to the cam shaft (22), the said transmission means comprising at least a cable or at least a link rod (27, 28, 29) extending transversely to the said shaft (22), between the latter and the electric motor.

5. Front structure (10) according to one of Claims 2 to 4, **characterized in that** the said cam shaft (22) and/or the said return means (24) are situated in the vicinity of the front edge (14a) of the said mobile element.

6. Front structure (10) according to one of Claims 2 to 5, **characterized in that** the cam shaft (22) with cams (23) extends over practically the entire length of the mobile element (14) in the transverse direction (Y) of the front structure, the said cams (23) preferably being uniformly distributed along the length of the shaft.

7. Front structure (10) according to one of Claims 2 to 6, **characterized in that** the cam shaft (22) with cams (23) comprises cams (23) of different sizes, for example having different maximum radius.

8. Front structure (10) according to one of Claims 1 to 7, **characterized in that** the flexible bellows (16) is made of a polymer material.

9. Front structure (10) according to one of Claims 1 to 8, **characterized in that** the flexible bellows (16) extends over the entire length of the front edge (14a) of the mobile element, this length extending for example over the entire length of the bumper.

10. Motor vehicle comprising a front structure (10) according to one of the preceding claims.
